# EUROPEAN PATENT APPLICATION

(11) **EP 3 373 057 A1**
(43) Date of publication of application: **12.09.2018**
(21) Application number: 17425025.8
(22) Date of filing: 07.03.2017
(51) Int. Cl.: G02B 6/44

(54) **OPTICAL CONDUCTOR CABLE FOR OVERHEAD POWER LINES AND METHOD FOR ITS IMPLEMENTATION**

(71) Applicant: Tratos Cavi S.p.A., 52036 Pieve S. Stefano AR (IT)
(72) Inventor: Bragagni, Albano, 52036 Pieve Santo Stefano (AR) (IT)
(74) Representative: Ripamonti, Enrico

(57) **Abstract**

An optical conductor cable (1) is described which comprises an optical assembly (10) provided with one or more containment sheaths (11) arranged for enclosing a plurality of cables made of optical fibers (12) and with a protection sheath (13) which encloses the containment sheaths (11), and a conductor assembly (20) comprising a conductor element (21) and a plurality of reinforcement elements (22), wherein the optical conductor cable (1) comprises a covering sheath (23) interposed between the optical assembly (10) and the conductor assembly (20) in a manner such to be arranged inside the conductor element (21) and externally surround the protection sheath (13).

A method is also described for implementing an optical conductor cable (1) comprising the step of inserting, via blowing, the optical assembly (10) inside the conductor assembly (20).

## Description

The present invention refers to a conductor cable in which optical fibers can be integrated, and to a method for its implementation. In particular, the conductor cable can be an overhead power line cable suitable for making the ground connection, a cable which is commonly also termed "shield wire."

Conductor cables or shield wires are known in the art which also comprise cables therein that are made of optical fiber.

These conductor cables are provided on the power lines for protecting the line from adverse events such as sudden electrical discharges, as in the case in which the power line is hit by lightning, or is subject to a short-circuiting. The shield wire therefore acts as lightning rod and grounding.

This conductor cable typically runs on the top of the pylons and is an additional cable with respect to the other cables supported by the pylon which instead transport electric current, which during use can instead be overheated due mainly to the "Joule Effect," since they reach temperatures comprised between 50°C and 200°C.

On the contrary, the shield wire is generally not overheated since it is a conductor cable which has the function of grounding but which does not actively convey current, if not during the aforesaid fortuitous adverse events, and typically only for a very brief time interval, generally equal to several fractions of a second.

For this reason, the shield wire is a cable which is adapted to constitute the support for the cables made of optical fiber, given that it is suitable for containing the latter. Indeed, if the cables made of optical fiber were continuously subjected to very high temperatures, their useful lifetime and their capacity to transmit data and information would be very significantly reduced.

In the art, an electro-optical cable has thus been developed which is simultaneously a current conductor cable and a cable capable of transmitting data and information due to the presence of optical fibers. This cable type cable is commonly known as "OPGW," an acronym of the English expression "OPtical Ground Wire."

The electro-optical cable of known type comprises a plurality of optical fibers grouped inside one or more insulating sheaths (which contain the fibers). The insulating sheaths can be enclosed by a further protection sheath (also insulating), and then arranged inside a metallic tube of extruded aluminum or of arc-welded steel, thus constituting the core or central element of the cable OPGW. Around such core, a plurality of wires made of steel, aluminum or alloys thereof are then roped with closed helix in order to confer the electro-optical cable with suitable electro-mechanical characteristics for resisting, during operation, mechanical stresses such as its own weight, the mechanical installation tension, weathering agents or adverse electrical events, such as lightning or short-circuiting.

One problem of the electro-optical cables of the known type is the fact that the optical part and the electro-mechanical part are integrated therein. It is clear that this involves various disadvantages. A first disadvantage is due to the fact that with these cables known in the art it is necessary to substitute the entire cable (and hence the optical part and the electro-mechanical part) even when it would be sufficient to only substitute one of the two parts, for example since it is damaged. A second disadvantage is that of having to sustain greater costs since if it was possible to substitute only one of the two parts integrated together, it is clear that there would be lower costs. Another disadvantage is due to the management of this integrated electro-optical cable, since generally the optical part is managed by one operator (e.g. a telephony operator) and the electro-mechanical part is managed by another operator (e.g. the manager of the power line), and consequently problems of economical-financial nature can arise (for example, establishing who must sustain the costs of maintenance/repair/installation or who can make use of possible fiscal relieves), given that in the cables of the prior art there are two subjects who are each owners of a different cable type. A further disadvantage is due to the fact that it is not possible to execute extraordinary maintenance operations on the optical part. For example, it is not possible to increase the number of optical fibers contained in the cable if the telephony manager realizes that it is necessary to increase the quantity of data to be transmitted; in this case, the entire electro-optical cable must be substituted, hence also the electro-mechanical part. Still another disadvantage is the fact that in order to execute extraordinary maintenance interventions on the optical part, it is necessary to remove voltage from the power line and the intervention must be executed by teams of operators specialized both in the telephony field and in the high voltage field, with consequent considerable intervention costs both for the employed personnel and for the equipment required for operating on the top of the pylons.

One object of the invention is to provide an optical conductor cable that is improved with respect to the electro-optical cables known in the art.

A further object of the invention is to provide an optical conductor cable in which the optical part and the electro-mechanical part are independent and not assembled together during manufacturing but rather only if necessary, also possibly at a time after the installation of the electro-mechanical component for the implementation.

Another object of the invention is to provide for a method for implementing an optical conductor cable in a simpler and more efficient manner than that of processes known in the art.

A still further object is that of providing for a method which allows implementing an optical conductor cable according to the invention only where the presence of an optical cable for the transmission of data and information is actually required.

According to the invention, an optical conductor cable is provided as defined in the below-reported claim 1.

According to the invention, a method is also provided for implementing an optical conductor cable as defined in the below-reported claim 6.

The invention will be better understood and actuated with reference to the enclosed drawings, which show an exemplifying and non-limiting embodiment thereof, in which:
Figure 1 is a schematic side view, partially exploded, of an optical conductor cable according to the invention,
Figure 2 is a cross section taken along the section plane II-II of figure 1,
Figure 3 is a cross section taken along the section plane III-III of figure 1,
Figure 4 is a cross section of the optical conductor cable according to the invention,
Figure 5 is a schematic view of a power line comprising an optical conductor cable according to the invention.

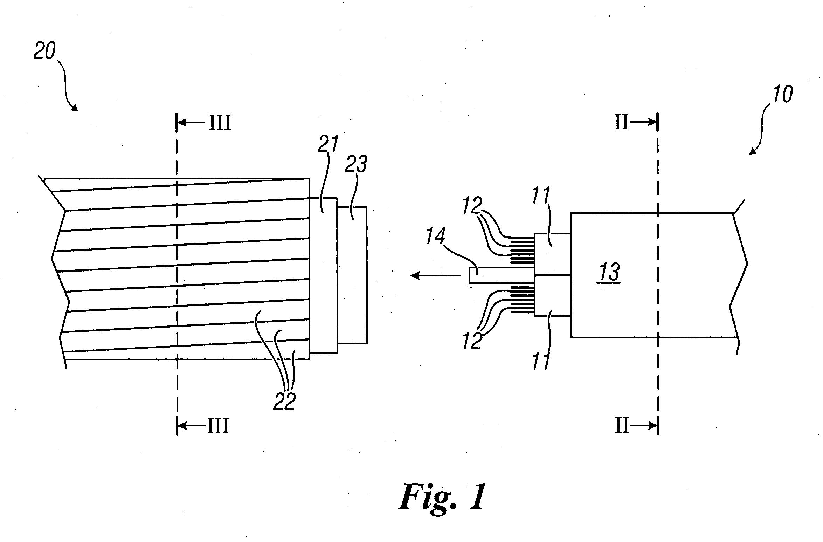

With reference to Figures 1-4, an optical conductor cable according to the invention is shown, which is indicated in its entirety with the reference number 1.

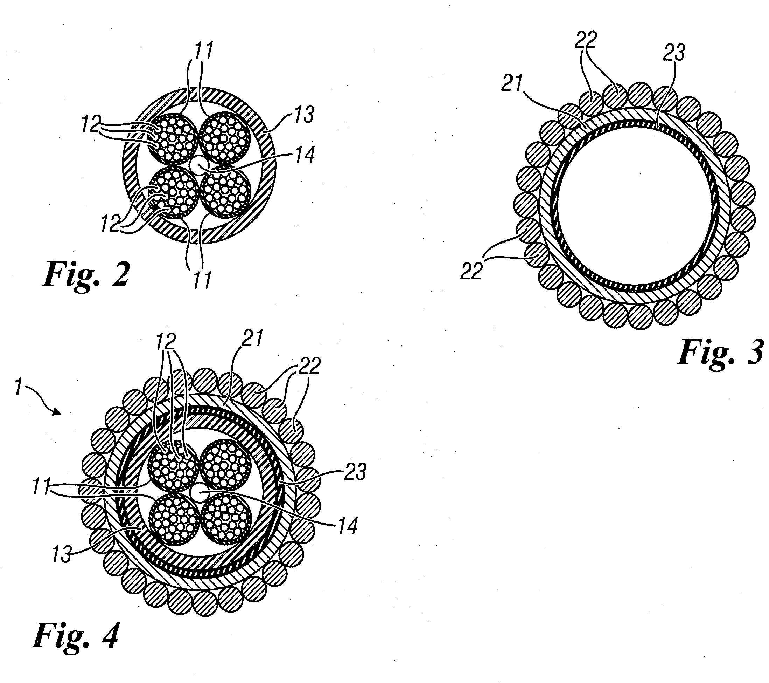

The optical conductor cable 1 comprises an optical assembly 10 (illustrated on the right side of Figure 1 and in Figure 2) and a conductor assembly 20 (illustrated on the left side of Figure 1 and in Figure 3). The conductor assembly 20 defines the shield wire of the power line.

The optical assembly 10 comprises one or more containment sheaths or elements 11 arranged for enclosing at least one or more optical fibers 12, known in the art and suitable for transmitting data or information. It is observed that each containment sheath can optionally comprise filling means of gelatinous nature (not shown) at its interior, in which the cables made of optical fibers 12 are immersed.

It is observed that the containment elements 11 can be indiscriminately arranged according to an intertwined configuration (roped) or parallel to each other, as in the version illustrated by way of example in the enclosed figures.

There can also be a very high number of optical fibers 12 inside each containment sheath 11.

The optical assembly 10 comprises at least one protection sheath 13 which encloses the sheaths or small containment tubes 11.

The optical assembly 10 can also comprise a stiffening element 14 adjacent to the containment sheaths 11, it too enclosed by the protection sheath 13. The stiffening element 14 is arranged for conferring suitable rigidity to the optical assembly 10. For this purpose, the stiffening element 14 is made with a suitable material, such as fiberglass.

In the illustrated version, the stiffening cable 14 is arranged in a central position of the optical assembly 10, being substantially concentric with the longitudinal extension axis of symmetry of the optical assembly 10. It is intended that in other, non-shown versions, the stiffening cable 14 can also be arranged in any other position different from the central position illustrated in the enclosed figures.

The conductor assembly 20 comprises at least one element made of electrically conductive material 21, which is made with a metal material, such as aluminum or steel, and is arranged for conducting the electric charge. The element 21 is substantially concentric with respect to the protection sheath 13 and is arranged externally with respect to the latter. In other words, in the optical conductor cable 1 according to the invention, the optical assembly 10 is arranged inside the conductor assembly 20 performing electro-mechanical functions.

The conductor assembly 20 also comprises at least one plurality of reinforcement elements 22, e.g. shaped as wires, arranged for reinforcing the optical conductor cable 1. The plurality of reinforcement wires 22 is arranged outside the conductor element 21. The reinforcement wires 22, known in the art, can be made with a steel composition (which confers the necessary mechanical strength) and aluminum (which instead confers the required electrical conductivity). For example, the reinforcement wires 22 can be steel wires covered with aluminum, known as ACS (aluminum clad steel).

The optical conductor cable 1 according to the invention comprises a covering duct 23 interposed between the optical assembly 10 and the conductor assembly 20 in a manner so as to be arranged inside the conductor element 21 and externally surround the protection sheath 13, so as to be in contact with the latter. In particular, the covering duct 23 is preferably associated with the conductor assembly 20, being integrally assembled therewith.

The protection sheath 13 and the covering duct 23 are made with a material with low friction coefficient such to facilitate the relative sliding of the sheath 13 within the covering duct 23. In particular, the protection sheath 13 and the covering duct 23 are made with suitable polymer materials.

For example, the protection sheath 13 can be made of a material lacking halogens, such as LSZH, and the covering duct 23 can be made of high-density polyethylene (HDPE).

The presence of the duct 23, which in the shield wires known in the art is generally absent, allows rendering the conductor assembly 20 available for receiving the optical assembly 10 at a later time, due to the fact that the external wall of the latter (i.e., the protection sheath 13) and the internal wall of the conductor assembly 20 (i.e., the covering duct 23) are made with materials that allow the mutual sliding of an assembly with respect to the other.

The optical conductor cable 1 according to the invention then has the advantage of allowing associating the optical assembly 10 with the conductor assembly 20 only when it is necessary. This can be obtained due to the fact that the optical assembly 10 can be inserted in, or extracted from, the conductor assembly 20 when it is desired, even at a time after the installation of the shield wire (formed by only the conductor assembly) on the power line. In other words, the optical conductor cable 1 has the advantage of being a modular cable in which the part relative to the data transmission - formed by the optical assembly 10 - is only added if necessary.

Hereinbelow, the method is described according to the invention for implementing the optical conductor cable 1.

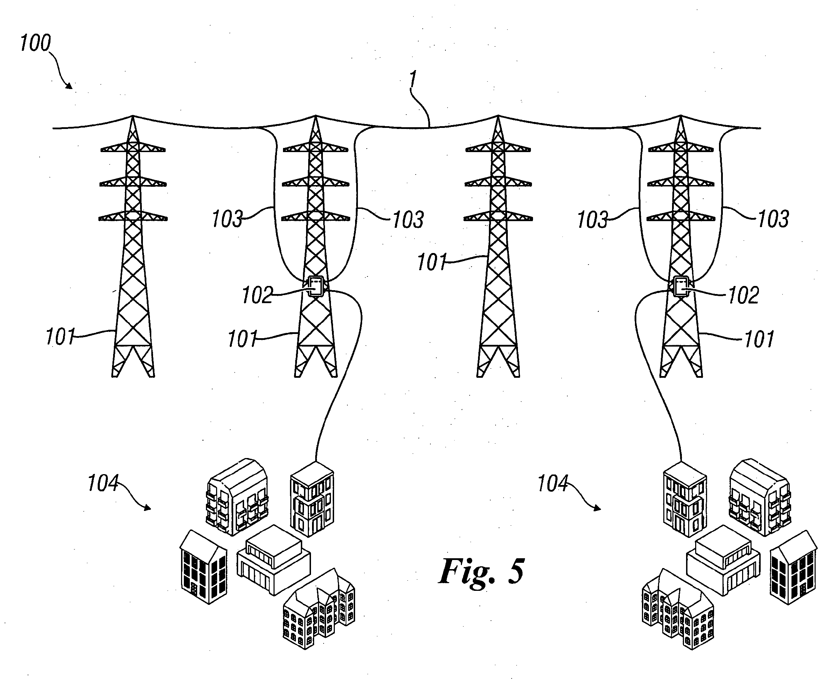

With particular reference to Figure 5, a portion of a power line is visible, which is indicated with the reference number 100. The power line 100 comprises a plurality of pylons, which are indicated with the reference number 101. It is observed that in the schematic view of figure 5, the cables which conduct electric current are not visible in order to make the representation clearer.

The method according to the invention provides for the step of inserting, via blowing, the optical assembly 10 inside the conductor assembly 20. It is observed that the insertion via blowing occurs according to known techniques by employing equipment which is commonly used by operators in the field of optical fiber cables. In particular, the insertion occurs due to the action of compressed air, which is generated by a compressor and which allows pushing the optical assembly 10 inside the conductor assembly 20. It is observed that the compressed air can be dehumidified, according to known techniques, in order to prevent condensation from being generated during the insertion via blowing, which could negatively affect the insertion of the optical assembly 10 within the conductor assembly 20. The presence of the stiffening element 14 prevents the optical assembly from being blocked (or "jammed") against the walls of the covering sheath 23.

The method of the invention provides that the step of inserting via blowing occurs through an interface element 102 due to which an operator is capable of intervening on the optical conductor cable 1. The interface element 102 therefore acts as "access port" through which the operator can insert the optical assembly 10 inside the conductor assembly 20, or - opposite - extract an optical assembly 10 from the conductor assembly 20, as will be explained more in detail hereinbelow.

The interface element 102 is associated with predetermined pylons 101 and arranged at an intermediate height between the ground and the top of the pylon itself. Due to this arrangement of the interface element 102, the operator can intervene in order to execute the necessary operations of installation or of maintenance on the optical assembly 10 in a position less distant from the ground with respect to the tip of the pylon, and hence less dangerous. In addition, the fact that the interface element 102 is arranged in a position more easily accessible for the operator ensures that it is possible to quickly and simply install/uninstall and maintain the optical assembly 10, without having to at all intervene on the conductor assembly 20 (i.e. on the electro-mechanical part), which always remains functioning and operational.

It is intended that in other embodiments an interface element 102 can be provided that is associated with each pylon 101 of a certain power line portion 100.

Before the step of inserting, via blowing, the optical assembly 10 inside the conductor assembly 20, the method provides for arranging the conductor assembly 20 on the top of the pylons 101 of the power line 100 in a manner so as to connect together such pylons and thus form the shield wire of the power line.

In other words, the conductor assembly 20 can be pre-existing and implemented on the pylons 101 even well before the time when the optical assembly 10 will actually be inserted via blowing.

After the step of arranging the conductor assembly 20 on the top of the pylons 101, the method provides for making a by-pass 103 at least at the pylons 101 associated with the interface element 102, in a manner such that the by-pass 103 crosses through the interface element 102. It is observed that the by-pass 103 may only comprise the covering sheath 23, which can optionally be inserted inside a protective element (not shown) in order to protect it against weathering agents. In other words, the by-pass 103 may typically lack the conductive element 21 and the reinforcement wires 22. In practice, the by-pass 103 is connected to the optical conductor cable 1 at shunt points from which only the protection sheath 23 departs, which - as stated - can already enclose the optical assembly 10 at the time of installation and is externally covered with an element protective against weathering agents. It is observed that this protective element is generally extended for the entire extension of the by-pass 103 and reaches the interface element 102 without entering therein. Within the interface 102, there are usually therefore only the protection sheath 23 and (possibly) the optical assembly 10.

During use, when it is desired to insert, via blowing, an optical assembly 10 inside a conductor assembly 20, such insertion occurs at the interface element 102, where the by-pass 103 (i.e. covering sheath 23) is interrupted in order to access the interior thereof. During the step of inserting, via blowing, the optical assembly 10 inside the protection sheath 23 it is provided to leave an excess of cable comprised in the optical assembly 10 at the interface element 102. This excess of cable, which remains contained within the interface element 102, can for example be equal to about a meter. It has the function of ensuring the presence of the necessary quantity of cable when the operator must shunt the data transmission line in order to wire a user 104 nearby, e.g. a town. It is observed that the shunt of the data transmission line occurs at the interface element 102 of the pylon 101 most suitable for reaching the user to be wired. The interface element 102 therefore also defines an "output port" through which it is possible to shunt the optical line for the data transmission in order to wire the desired zones.

If, inside the optical assembly 20, a different optical assembly 10 is already present, it is possible to insert, via blowing, the new optical assembly 10 only after having extracted the preceding assembly from the conductor assembly 20. For example, this is verified when the preceding optical assembly fails or is damaged and hence its data transmission capacity is reduced, or when one desires to substitute it with a new improved, higher-performing optical assembly 10 (e.g. comprising more optical fiber cables made 12 or new-generation cables).

Due to the method for implementing the optical conductor cable 1, it is possible to obtain various advantages.

One advantage of the method according to the invention is that of being able to transform a shield wire into a cable also capable of transmitting data and information by means of optical fiber, if this is necessary.

Another advantage is that the method makes possible the insertion of the optical assembly 10 only when there is actually the need to introduce the optical part, and only for the sections of the power line of interest. This is a considerable advantage since the method according to the invention is applicable to a pre-existing shield wire which is suitable for receiving the optical assembly 10, without it being necessary to substitute shield wire that is already implemented. In addition, the method also offers the considerable advantage of being able to have an optical assembly 10 inserted inside the conductor assembly 20 (i.e. of the shield wire) only in the sections of the power line where it is necessary to have also the optical part for the data and information transmission. It is clear that this allows having a very considerable cost savings, since at uninhabited or sparsely inhabited zones it is evident that an electro-optical cable would be unnecessary.

A further advantage of the method according to the invention is its great flexibility. Indeed, once the pylons 101 at which the interface element 102 is associated have been pre-established, the method allows having a plurality of points or sites which make the power line substantially modular. Indeed, it is possible to introduce the optical assembly 10 inside the conductor assembly 20 at any one of the interface elements 102 up to the adjacent interface element 102. In addition, another advantage is the fact that there can also be a great number of interface elements 102 on the power line 100, so as to provide the same number of points already adjacent to the zones to be wired from which it is possible to shunt the cable made of optical fiber.

A further advantage of the cable and of the method according to the invention is the fact that both the power line 100 and the optical conductor cable 1 are substantially modular. Due to this, it is possible to have sections of the national power line (i.e., of the power line 100) in which the optical conductor cable 1 is present, and other sections of the line in which only one conductor assembly 20 is present, i.e. a shield wire, without the optical assembly 10. Due to the modularity, it is observed that it is also possible to have sections of electro-optical cable comprising different numbers of fiber-optic cables. In particular, the power line sections 100 that pass in proximity to large cities, regional capitals, can comprise a high number of optical fibers (e.g. an optical assembly 10 with 288 optical fibers), while the sections of power line 100 in proximity to towns of medium-small size comprise a lower number of optical fibers (e.g. an optical assembly 10 with 48 optical fibers). This, in addition to considerable savings on the optical cable purchasing costs, also involves a further advantage tied to the management of the line. Indeed, the national power line is normally operated by an operator, while the data transmission network made of optical fiber is managed by one or more telephony and Internet service operators (naturally different from the operator who manages the power line). Consequently, the cable and the method according to the invention have the advantage of providing a power line for the transmission of high-voltage electrical energy which is already available for also constituting the load-bearing infrastructure of the data transmission cables. When a telephony operator is interested in wiring a specific zone with fiber-optic cables, it will be sufficient to coordinate efforts with the manager of the power line in order to insert, via blowing, the optical assembly 10 inside the conductor assembly 20 at the power line portion 100 of interest, i.e. that most suitable based on the zone to be wired. Analogously, if the telephony operator wishes to substitute the optical assembly 10 with a higher-performing assembly, capable of transmitting a higher quantity of data at a higher speed, the method has the advantage of ensuring that the substitution is simple, quick and inexpensive, since it does not involve the disassembly and disposal of the electro-mechanical part, still adapted to perform its functions. Analogously, if the electro-mechanical part, i.e. the conductor assembly 20, is damaged - for example following a lightning episode - it is possible to extract the optical assembly 10 which has not been damaged, substitute the electro-mechanical part with a new conductor assembly 20 and subsequently insert, via blowing, the optical assembly 10 which was previously extracted. In this manner, unlike the electro-optical ducts known in the art, "OPGW," there is the great advantage of being able to only substitute the desired part (for example since it is damaged or since it is necessary to render it higher-performing) from among the optical and electro-mechanical parts, without having to necessarily substitute the other part as well. This ensures that the maintenance intervention may be only performed by personnel specialized in the telephony field, without involving the technicians of the power line manager. Consequently, the maintenance interventions on the optical assembly 10 are quicker and less costly.

Another advantage of the electro-optical cable 1 according to the invention, directly tied to the above-described advantages of modularity and flexibility of the cable, is that of being able to drastically reduce the times when the power line portion 100, on which intervention is taking place, is not operative and hence is "off-line," i.e., disconnected from the national power line.

Still another advantage of the method according to the invention is that of allowing considerable savings on the costs of installation/maintenance due to the fact that these operations are less difficult and hence faster.

Still a further advantage of the method according to the invention is given by the fact that it allows arranging a shield wire (i.e., the electro-mechanical cable formed by the conductor assembly 20) adapted to form a load-bearing infrastructure suitable for receiving one or more cables of any type at its interior, also in addition to or as an alternative to the above-described optical assembly 10.

## Claims

1. Optical conductor cable (1) comprising:
- an optical assembly (10) in turn comprising:
- one or more containment sheaths (11) arranged for enclosing at least one or more cables made of optical fibers (12) suitable for transmitting data,
- at least one protection sheath (13) that encloses said one or more containment sheaths (11),
- a conductor assembly (20) in turn comprising:
- at least one conductor element (21) which is made with a metal material and is arranged for conducting the electric charge, said at least one conductor element (21) being substantially concentric with respect to said protection sheath (13) and arranged externally with respect to the latter,
- at least one plurality of reinforcement elements (22) arranged for reinforcing said optical conductor cable (1), said plurality of reinforcement elements (22) being arranged outside said conductor element (21),
said optical conductor cable (1) being **characterized in that** it comprises a covering duct (23) interposed between said optical assembly (10) and said conductor assembly (20) in a manner such to be arranged inside said conductor element (21) and externally surrounding said protection sheath (13).

2. Cable according to claim 1, **characterized in that** said protection sheath (13) and said covering duct (23) are made with a material with low friction coefficient such to facilitate the relative sliding of one with respect to the other.

3. Cable according to claim 1 or 2, **characterized in that** said protection sheath (13) and said covering duct (23) are made with polymer materials.

4. Cable according to one of the preceding claims, **characterized in that** said optical assembly (10) comprises a stiffening cable (14) adjacent to said one or more small tubes (11) and enclosed by said protection sheath (13) in order to confer suitable rigidity to said optical assembly (10).

5. Cable according to one of the preceding claims, **characterized in that** said covering duct (23) is associated with said conductor assembly (20).

6. Method for implementing an optical conductor cable (1) according to one of the preceding claims, **characterized in that** it comprises the step of inserting, via blowing, an optical assembly (10) inside a conductor assembly (20).

7. Method according to claim 6, **characterized in that** before said inserting, it is provided to arrange said conductor assembly (20) on the pylons (101) of a power line (100) in a manner so as to connected together said pylons (101).

8. Method according to claim 6 or 7, **characterized in that** said inserting via blowing is provided through an interface element (102), through which the operator can insert said optical assembly (10) inside said conductor assembly (20), or extract said optical assembly (10) from said conductor assembly (20).

9. Method according to claim 8, **characterized in that** it provides for shunting the optical line for the data transmission for the purpose of wiring one or more users (104) through said interface element (102).

10. Method according to claim 8 or 9, **characterized in that** provision is made for associating said interface element (102) with predetermined pylons (101) and arranging said interface element (102) at an intermediate height between the ground and the top of the pylons (101).

11. Method according to one of the claims 8 to 10, **characterized in that** after said arranging said conductor assembly (20) on the pylons (101), it is provided to make a by-pass (103) at least at the pylons (101) which is associated with said interface element (102) in a manner such that said by-pass (103) crosses through said interface element (102).

12. Method according to one of the claims 8 to 11, **characterized in that** during said inserting, via blowing, said optical assembly (10) in said conductor assembly (20), it is provided to leave an excess of cable comprised in said optical assembly (10) at said interface element (102).

13. Method according to one of the claims 8 to 12, **characterized in that** before said inserting, via blowing, said optical assembly (10), provision can be made for extracting a different optical assembly (10) from said conductor assembly (20) through said interface element (102).

14. Use of an optical conductor cable according to any one of the claims 1 to 5 in a power line (100) comprising a plurality of pylons (101) and one or more interface elements (102) associated with predetermined pylons (101).
